Europäisches Patentamt

European Patent Office

Office européen des brevets

(11) Publication number: **0 426 628 A2**

# EUROPEAN PATENT APPLICATION

(21) Application number: 90850328.7

(51) Int. Cl.5: **F16B 7/14**

(22) Date of filing: 05.10.90

(30) Priority: 01.11.89 SE 8903652

(43) Date of publication of application:
08.05.91 Bulletin 91/19

(84) Designated Contracting States:
CH DE FR GB IT LI NL

(71) Applicant: AKTIEBOLAGET ELECTROLUX
Luxbacken 1
S-105 45 Stockholm(SE)

(72) Inventor: Sjöberg, Rolf Göran
Korsängsvägen 12
S-196 30 Kungsängen(SE)

(74) Representative: Hagelbäck, Evert Isidor et al
c/o AB Electrolux Corporate Patents &
Trademarks
S-105 45 Stockholm(SE)

(54) Device for interlocking telescopically slidable tubes.

(57) A device for interlocking of tubes telescopically slidable in each other comprises two levers (12) connected to the outer tube (10) and rotatable around mutual supporting points (13) on each side of the inner tube (11). The levers (12) comprise a first lever arm (16) provided with brake means (18) and actuated by a spring (19) which causes the brake means to engage the inner tube, and a second lever arm (17) which is manually actuatable to release the brake means against the action of the spring (19).

Fig.1

## DEVICE FOR INTERLOCKING TELESCOPICALLY SLIDABLE TUBES

The present invention relates to a device for interlocking tubes telescopically slideable in each other.

A frequently used type of device for this object comprises a clamping ring or the like which is pressed against the inner tube by means of a screw or excenter mechanism. These prior art devices have a safe and reliable function per se but have the disadvantage of being circumstantial and tardy to handle. The object of the invention is therefore to provide a device which is handled in an easy and simple manner and consequently ensures rapid and uncomplicated adjustment of the mutual positions of the tubes.

This object has been achieved by means of a device of the kind mentioned in the introduction which according to the invention is characterized in that it comprises two levers which are connected to the outer tube and rotatable around mutual supporting points on opposite sides of the inner tube, each of said levers comprising a first lever arm provided with brake means and actuated by a spring causing said brake means to engage said inner tube, and a second lever arm which is manually actuatable to release said brake means against the action of said spring.

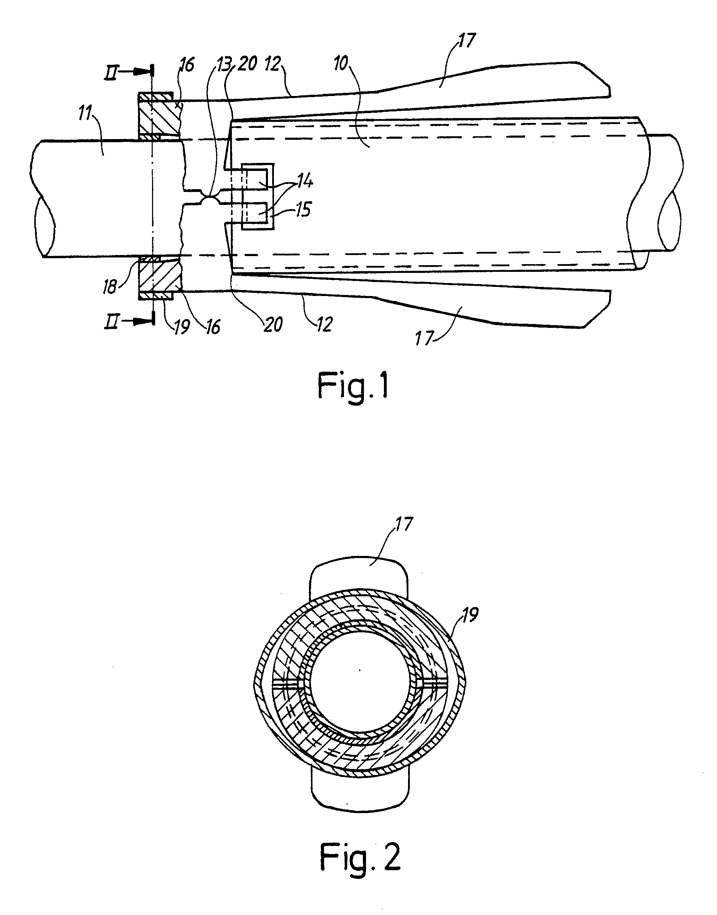

The invention will be described in more detail in the following with reference to the accompanying drawing on which Fig. 1 is a side elevation, partly in section, of the device according to the invention, and Fig. 2 is a cross-section taken along line II-II in Fig. 1.

The device illustrated in the drawing comprises an outer tube 10, and an inner tube 11 which is slidable in the outer tube. The two tubes 10 and 11 are interlocked in optionally adjustable mutual positions by means of an assembly comprising two identical levers 12 disposed on opposite sides of the tubes and rotatable around two mutual supporting points 13, one of which is shown in Fig. 1. The levers 12 are connected to the outer tube 10 by detent means 14 engaging in recesses 15 in the tube.

Each of the levers 12 comprises a first, semicircular lever arm 16 surrounding the inner tube, and a second, elongated lever arm 1 7 extending along the outer tube. The first lever arm 16, the end portion of which is shown in section in Fig. 1, is provided on its inside with a brake lining means 18 which is pressed against the inner tube by an annular, slightly oval spring 19 which surrounds said end portion. Both the tubes are thereby mutually interlocked. When the mutual position of the tubes 10, 11 is to be adjusted, the lever arms 17 are pushed towards each other which can easily be performed with one hand, whereby the levers 12 rotate around the supporting points 13 and the brake linings 18 are removed from the inner tube 11 against the action of the spring 19. The interlocking of the tubes is thereby released and the operator can displace the inner tube 11 to the preferred position with his other hand and subsequently release the lever arms 17, whereby the tubes are again interlocked in the adjusted position.

When the device is subjected to a traction, the force is transmitted from the inner tube 11 via brake lining 18, lever arm 16 and detent means 14 to the outer tube 10. As is best seen in Fig. 1, the force transmitted from the brake lining 18 to the detent means 14 has an oblique direction in relation to the longitudinal axis of the tubes and thus has a radial component force which increases the engagement pressure of the brake lining 18 against the inner tube. The brake is thereby self-locking.

When the transmitted force is instead a compressive force and thus directed in the opposite direction, the force is transmitted from the outer tube 10 to the lever 12 at a point designated 20 in Fig. 1. From this point to the surface of engagement of the brake lining 18 against the inner tube the force has an oblique direction and has a component force directed radially inwards and tending to apply the brake harder. Thus, even in this case the brake is self-locking.

## Claims

1. Device for interlocking tubes (10,11) telescopically slideable in each other, **characterized** in that it comprises two levers (12) which are connected to the outer tube (10) and rotatable around the mutual supporting points (13) on opposite sides of the inner tube (11), each of said levers comprising a first lever arm (16) provided with brake means (18) and actuated by a spring (19) causing said brake means to engage said inner tube, and a second lever arm (17) which is manually actuatable to release said brake means against the action of said spring (19).

2. Device according to claim 1, **characterized** in that the first lever arm (16) is generally semicircular and is provided with a brake means (18) on its inside and that the spring (19) has a slightly oval annular form and surrounds the free end of said lever arm (16)

Fig.1

Fig. 2